# EUROPÄISCHE PATENTSCHRIFT

(11) **EP 1 004 614 B1**
(45) Veröffentlichungstag und Bekanntmachung des Hinweises auf die Patenterteilung: **13.06.2001**
(21) Anmeldenummer: 99120978.4
(22) Anmeldetag: 04.11.1999
(51) Int. Cl.: C08G 77/46, C08G 77/388, C08G 77/392

(54) **Grenzflächenaktive Organosiliciumverbindungen**
Surface active organosilicon compounds
Composés d'organosilicium tensioactifs

(30) Priorität: 24.11.1998 DE 19854186
(43) Veröffentlichungstag der Anmeldung: 31.05.2000
(73) Patentinhaber: Wacker-Chemie GmbH, 81737 München (DE)
(72) Erfinder: Abele, Bors Cajus, Dr., 84489 Burghausen (DE); Koini, Thomas, Dr., 84489 Burghausen (DE)
(74) Vertreter: Fritz, Helmut, Dr.

(56) Entgegenhaltungen:
- DE-A- 4 318 537
- DE-A- 4 318 539

## Beschreibung

Die Erfindung betrifft mit mono- oder polyhydroxylierten Kohlenwasserstoffresten bzw. Kohlenhydratderivaten modifizierte Organosiliciumverbindungen, deren Herstellung und Verwendung.

Unter der Bezeichnung Organopolysiloxane werden im folgenden dimere, oligomere und polymere Siloxane verstanden. Beispielsweise sind in der DE-A-4306041 Kohlenhydratmodifizierte Organopolysiloxane beschrieben. Dort werden Zuckerreste über eine Pt-katalysierte Hydrosilylierungsreaktion von ungesättigte Kohlenwasserstoffreste beinhaltenden Kohlenhydratmono- bzw. -oligomeren an Si-H-funktionelle Organopolysiloxane gebunden.

Nachteilig ist hierbei der Einsatz von Übergangsmetallkatalysatoren, um eine Anbindung der entsprechenden Kohlenhydrat-Verbindungen an das Siloxan-Derivat zu ermöglichen. Diese Übergangsmetallkatalysatoren sind aus dem entstehenden Produkt nicht mehr zu entfernen.

In der US-A-5,739,192 sind Polysiloxan-Copolymere beschrieben, die durch Michael-Addition von Acrylaten an Aminoreste von Organopolysiloxanen hergestellt werden. Die Endgruppen der Polysiloxan-Copolymere sind Kohlenwasserstoff- oder Polyethergruppen. Die Polysiloxan-Copolymere können als Tenside verwendet werden.

Im Falle einer Kohlenwasserstoff-Modifikation mit Hilfe von Kohlenwasserstoff-haltigen (Meth-)Acrylaten erhält man hydrophobe Verbindungen. Bei Verwendung von Polyalkylenoxid-haltigen Acrylaten werden nur leicht hydrophile Verbindungen erhalten.

Polysiloxane mit Zuckerresten werden auch von JP-A-6268820 beschrieben. Sie werden erhalten durch Umsetzung von Polysiloxanen mit Lactonen, die sich von Aldon- und Uronsäuren ableiten, und grenzflächenaktive Eigenschaften zeigen. Nachteilig ist, daß nur oxidierte Zucker (Zuckerlactone) eingesetzt werden können.

Weitere Verfahren zur Herstellung von Kohlenhydratresten aufweisenden Organosilanen, -siloxanen oder -polysiloxanen über nucleophile Additionsreaktionen sind in DE-A-4318536 beschrieben. Nachteilig ist, daß keine Keto-Funktion im Edukt vorhanden ist, die für Folgereaktionen zur Verfügung stehen kann.

Es bestand die Aufgabe, die vorstehend beschriebenen Nachteile zu vermeiden, insbesondere stark hydrophile bzw. stark grenzbzw. oberflächenaktive Organosilicium-Verbindungen ohne den Einsatz von Übergangsmetallkatalysatoren bereitzustellen.

Gegenstand der Erfindung sind Organosiliciumverbindungen enthaltende Einheiten der allgemeinen Formel (I)

AₐR_{b}SiX_{c}O_{(4-a-b-c)/2} (I)

wobei
- **R**: gleich oder verschieden sein kann und einen einwertigen, gegebenenfalls mit Halogen-, Amin-, Mercapto- oder Ammoniumgruppen substituierten Kohlenwasserstoffrest mit 1 bis 22 Kohlenstoffatomen bedeutet,
- **X**: gleich oder verschieden ist und ein Chloratom oder einen Rest der Formel -OR¹ bedeutet,
- **R**^{**1**}: gleich Wasserstoffatom oder Alkylrest mit 1 bis 8 Kohlenstoffatomen, der durch Ether-Sauerstoff-Atome substituiert sein kann, oder einen Rest der allgemeinen Formel (II)

-R²{[CH(CH₃)CH₂O]ₑ[CH₂CH₂O]_{f}[(CH₂)₄O]_{g}R₃}_{y-1} (II)

bedeutet,
wobei
- **R**^{**2**}: einen zweiwertigen, dreiwertigen oder vierwertigen Kohlenwasserstoffrest mit 2 bis 30 Kohlenstoffatomen bedeutet, der durch eine oder mehrere Gruppen der Formeln -C(O)-O-, -C(O)-NR³-, -SO₂-NR³₂-, 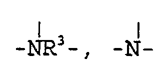 und -S- unterbrochen ist, und der durch Sauerstoffatome unterbrochen sein kann
- **y**: entsprechend der Wertigkeit von Rest **R**^{**2**} die Werte 2, 3 oder 4 bedeutet,
- **R**^{**3**}: ein Wasserstoffatom oder einen gegebenenfalls durch eine Gruppe -C(O)-unterbrochenen Kohlenwasserstoffrest mit 1 bis 20 Kohlenstoffatomen bedeutet,
- **e, f** und **g**: jeweils unabhängig voneinander die Werte 0 oder eine ganze Zahl von 1 - 200 bedeuten, mit der Maßgabe, daß die Summe **e+f+g** ≥ 1 ist,
- **A**: ein Rest der allgemeinen Formel (III)

-R⁴{-C(H)Cₙ(H₂O)ₙ}_{y-1} (III)
ist, wobei
- **R**^{**4**}: eine für **R**^{**2**} angegebene Bedeutung hat,
- **y**: entsprechend der Wertigkeit von Rest **R**^{**4**} die Werte 2, 3 oder 4,
- **n**: eine ganze Zahl von 1 bis 1 000 000,
- **a**: die Werte 0, 1 oder 2 und,
- **b** und **c**: jeweils die Werte 0, 1, 2 oder 3 bedeuten, und bei Oligo- und Polysacchariden pro formal hinzugefügten Kohlenhydrat-Monomeren oder -polymeren ein Molekül H₂O aus der Summenformel abzuziehen ist,
oder **A** ein teilweise reduziertes, oxidiertes oder teilweise dehydratisiertes oder Organyl-modifiziertes Derivat der Formel (III) ist,
mit der Maßgabe, daß die Summe **a+b+c** ≤ 4 ist und die Organosiliciumverbindung pro Molekül mindestens einen Rest **A** aufweist.

Bei den Organosiliciumverbindungen handelt es sich um mit mono- oder polyhydroxylierten Kohlenwasserstoffresten bzw. Kohlenhydratderivaten modifizierte Organosilicium-Verbindungen. Diese können sowohl Silane sein, d.h. Verbindungen der allgemeinen Formel (I) mit a+b+c=4, als auch Siloxane, d.h. Verbindungen enthaltend Einheiten der allgemeinen Formel (I) mit a+b+c ≤ 3. Vorzugsweise handelt es sich bei den organosiliciumverbindungen um Organopolysiloxane, insbesondere um solche, die aus Einheiten der allgemeinen Formel (I) bestehen.

Die Organosiliciumverbindungen besitzen vorzugsweise ein durchschnittliches Molekulargewicht von 200 bis 1 000 000 g/mol, besonders bevorzugt 5 000 bis 150 000 g/mol, und vorzugsweise eine Viskosität von 10 bis 1 000 000 mm²/s, besonders bevorzugt 20 bis 100 000 mm²/s, jeweils bei 25 °C.

Die Organosiliciumverbindungen können flüssig, aber auch wachsartig oder fest sein.

Beispiele für Reste R sind Alkylreste, wie der Methyl-, Ethyl-, n-Propyl, iso-Propyl-, 1-n-Butyl, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylrest, wie der 2,2,4-Trimethylphenylrest; Nonylreste, wie der n-Nonylrest; Decylreste, wie der n-Decylrest; Octadecylreste wie der n-Octadecylrest, Cycloalkylreste, wie der Cyclopentyl-, Cyclohexyl-, Cycloheptylrest und Methylcyclohexylrest; Alkenylreste, wie der Vinyl-, Allyl, 3-Butenyl-, 5-Hexenyl-, 1-Propenyl- und 1-Pentenylrest; Alkinylreste, wie der Ethinyl-, Propargyl- und 1-Propinylrest, Arylreste, wie der Phenyl-, Naphthyl-, Anthryl- und Phenanthrylrest; Alkarylreste, wie o-, m-, p-Tosylreste; Xylylreste und Ethylphenylreste; und Aralkylreste, wie der Benzylrest, der Phenylethylrest und der Phenylnonylrest.

Beispiele für substituierte Kohlenwasserstoffreste **R** sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p- Chlorphenylrest.

Bevorzugt handelt es sich bei dem Rest **R** um gegebenenfalls mit Halogen-, Amin-, Mercapto- oder Ammoniumgruppen substituierte Kohlenwasserstoffreste mit 1 bis 18 Kohlenstoffatomen, wobei der Methyl-, der n-Octyl, der n-Dodecyl und der n-Octadecylrest besonders bevorzugt sind.

Beispiele für Alkylreste **R**^{**1**} sind die für Rest **R** angegebenen Beispiele für Alkylreste mit bis zu 8 Kohlenstoffatomen sowie der Methoxyethyl- und Ethoxyethylrest.

Bevorzugt ist der Rest **R**^{**1**} ein Wasserstoffatom, eine Methyl-, Ethyl-, Butyl-, oder Propylgruppe, insbesondere Methyl- und Ethylgruppe.

Beispiele für Reste **R**^{**2**} sind -(CH₂)₃-NH-CH₂-CH₂-CO-O-,
- (CH₂)₃-N-(CH₂-CH₂-CO-O-)₂,
- (CH₂)₃-N-cyclo-(C₆H₁₁)-CH₂-CH₂-CO-O-,
- (CH₂)₃-NH-(CH₂)₂-NH-CH₂-CH₂-CO-O-, 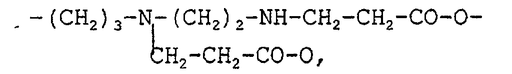
- (CH₂)₃-NH-(CH₂)₂-N(-CH₂-CH₂-CO-O-)₂,
- (CH₂)₃-S-CH₂-CH₂-CO-O-,
- (CH₂)₃-NH-CH₂-CH₂-CO-O-(CH₂)₂-,
- (CH₂)₃-N-(CH₂-CH₂-CO-O-(CH₂)₂-)₂,
- (CH₂)₃-N-cyclo-(C₆H₁₁)-CH₂-CH₂-CO-O-(CH₂)₂-,
- (CH₂)₃-NH-(CH₂)₂-NH-CH₂-CH₂-CO-O-(CH₂)₂-, 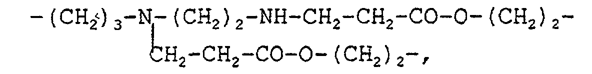
-(CH₂)₃-NH-(CH₂)₂-N(-CH₂-CH₂-CO-O-(CH₂)₂-)₂,
-(CH₂)₃-S-CH₂-CH₂-CO-O-(CH₂)₂-,
-(CH₂)₃-NH-CH₂-CH₂-CO-O-CH₂-CH₂-N(C₄H₉)SO₂-,
-(CH₂)₃-N-(CH₂-CH₂-CO-O-CH₂-CH₂-N(C₄H₉)SO₂-)₂,
-(CH₂)₃-N-cyclo-(C₆H₁₁)-CH₂-CH₂-CO-O-(CH₂)₂-N(C₄H₉)SO₂-,
- (CH₂)₃-NH-(CH₂)₂-NH-CH₂-CH₂-CO-O-(CH₂)₂-N(C₄H₉)SO₂-, 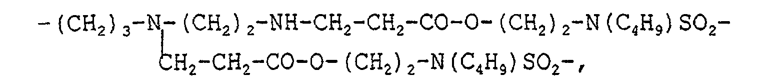
- (CH₂)₃-NH-(CH₂)₂-N(-CH₂-CH₂-CO-O-(CH₂)₂-N(C₄H₉)SO₂-)₂,
- (CH₂)₃-S-(CH₂)₂-CO-O-(CH₂)₂-N(C₄H₉)SO₂-.

Bevorzugt handelt es sich bei Rest **R**^{**2**} um
- (CH₂)₃-NH-CH₂-CH₂-CO-O-,
-(CH₂)₃-N-(CH₂-CH₂-CO-O)₂,
-(CH₂)₃-NH-(CH₂)₂-NH-CH₂-CH₂-CO-O-, 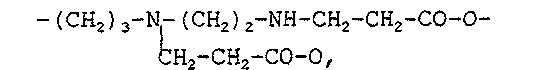
- (CH₂)₃-NH-(CH₂)₂-N(-CH₂-CH₂-CO-O-)₂,
- (CH₂)₃-NH-CH₂-CH₂-CO-O-(CH₂)₂-,
- (CH₂)₃-N-(CH₂-CH₂-CO-O-(CH₂)₂-)₂,
- (CH₂)₃-NH-(CH₂)₂-NH-CH₂-CH₂-CO-O-(CH₂)₂-, 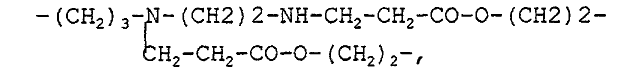
- (CH₂)₃-NH- (CH₂)₂-N (-CH₂-CH₂-CO-O-(CH₂)₂-)₂,
- (CH₂)₃-NH-CH₂-CH₂-CO-O-CH₂-CH₂-N (C₄H₉) SO₂-,
- (CH₂)₃-N-(CH₂-CH₂-CO-O-CH₂-CH₂-N(C₄H₉)SO₂-)₂,
- (CH₂)₃-NH-(CH₂)₂-NH-CH₂-CH₂-CO-O-(CH₂)₂-N (C₄H₉)SO₂-, 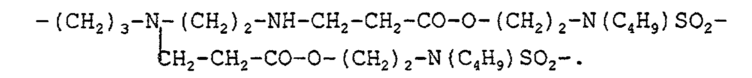
- (CH₂)₃-NH- (CH₂)₂-N(-CH₂-CH₂-CO-O-(CH₂)₂-N(C₄H₉) SO₂-)₂,
Bevorzugt sind auch die Methacrylate.

Beispiele für Reste **R**^{**3**} sind die für Rest **R** angegebenen Beispiele für Kohlenwasserstoffreste mit 1-20 Kohlenstoffatomen sowie-CO-CH₃, -CO-CH₂-CH₃ und -CO-CH₂CH₂CH₂CH₃.

Bevorzugt ist der Rest **R**^{**3**} ein Wasserstoffatom, eine Methyl- oder Butylgruppe.

Beispiele für Reste **X** der allgemeinen Formel (II) sind
-CH₂-CH₂-CO-[OC₂H₄]₉OCH₃, -CH₂-CH₂-CO-[OC₂H₄]₆OC₆H₅ und
-CH₂-CH₂-CO- [OC₂H₄]₁₆OC₆H₄-p-C₉H₁₉.

Bevorzugt handelt es sich bei den Resten der allgemeinen Formel (II) um
-CH₂-CH₂-CO-[OC₂H₄]₉OCH₃.

Bevorzugt beträgt der Wert für die Summe **e+f+g** 2 bis 30, besonders bevorzugt 4 bis 20.

Bevorzugt handelt es sich bei **X** um den Rest -OR¹ mit **R**^{**1**} gleich der obengenannten Bedeutung, wobei -OCH₃ und -OC₂H₅ besonders bevorzugt sind.

Bevorzugte Beispiele für Rest **R**^{**4**} sind die für Rest **R**^{**2**} angegebenen Beispiele. Bevorzugt sind auch die Methacrylate.

Bevorzugt ist **n** gleich 2, 4, 5, 6, 7, 8, 10, 12, 18 und 20, besonders bevorzugt 8, 10 und 12. n kann bei Oligo- bzw. Polysacchariden aber auch viel höhere Werte erreichen.

Bevorzugt handelt es sich bei dem Rest **A** um
- (CH₂)₃-NH-CH₂-CH₂-CO-O-CH₂-CH₂-Z,
-(CH₂)₃-N-(CH₂-CH₂-CO-O-CH₂-CH₂-Z)₂,
- (CH₂)₃-NH-(CH₂)₂-NH-CH₂-CH₂-CO-O-CH₂-CH₂-Z,
-(CH₂)₃-NH-(CH₂)₂-N(-CH₂-CH₂-CO-O-CH₂-CH₂-Z)₂, 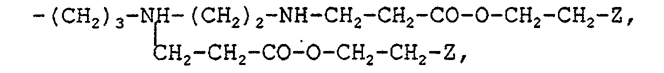
-(CH₂)₃-NH-CH₂-CH₂-CO-NH-(CH₂)₁₀-CO-N(CH₃)-CH₂(CHOH)₄CH₂OH,
-(CH₂)₃-N(-CH₂-CH₂-CO-NH-(CH₂)₁₀-CO-N(CH₃)-CH₂(CHOH)₄CH₂OH)₂,
- (CH₂)₃-NH-(CH₂)₂-NH-CH₂-CH₂-CO-NH-(CH₂)₁₀-CO-N(CH₃)-CH₂(CHOH)₄CH₂OH,
- (CH₂)₃-NH-(CH₂)₂-N(-CH₂-CH₂-CO-NH-(CH₂)₁₀-CO-N(CH₃)-CH₂(CHOH)₄CH₂OH)₂, 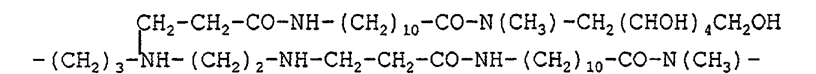
CH₂(CHOH)₄CH₂OH,
-(CH₂)₃-NH-(CH₂)₂-NH-CH₂-CH₂-CO-O-CH₂-CH₂-Z,
-(CH₂)₃-NH-(CH₂)₂-N(-CH₂-CH₂-CO-O-CH₂-CH₂-Z)₂ und 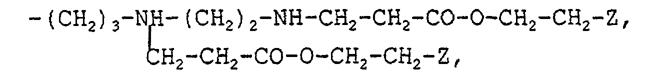 besonders bevorzugt sind,
und **Z** gleich OC₆H₁₁O₅,
d.h. Glucosidyl: 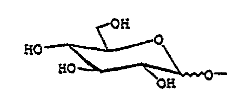 Mannosidyl: 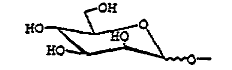 Galactosidyl: 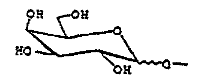 oder beispielsweise gleich OC₅H₉O₄
d.h. Xylosidyl: 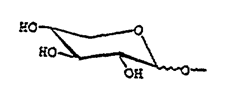 oder ein Oligo- oder Polysaccharidderivat.

Bevorzugt handelt es sich bei den Organosiliciumverbindungen um solche der allgemeinen Formel (IV)

AₕR₃₋ₕSiO(SiR₂O)ₒ(SiRAO)ₘSiR₃₋ₕAₕ (IV),

wobei
- **A** und **R**: die oben dafür angegebene Bedeutung haben,
- **h**: die Werte 0, 1 oder 2 hat,
- **m** und **o**: jeweils 0 oder eine ganze Zahl von 1 bis 1000 bedeuten, mit der Maßgabe, daß mindestens ein Rest **A** je Molekül enthalten ist und die **o** Einheiten (SiR₂O) und die **m** Einheiten (SiRAO) beliebig im Molekül verteilt sein können.

Bevorzugt weisen die mit mono- oder polyhydroxylierten Kohlenwasserstoffresten bzw. durch Kohlenhydratderivate modifizierten Aminoalkylsilane, -siloxane und -polysiloxane einen mono- bzw. polyhydroxylierte Alkylgruppen-Gehalt von 0.5 bis 99 Gewichtsprozent, besonders bevorzugt 1 bis 45 Gewichtsprozent, auf. Gegenstand der Erfindung ist weiterhin ein Verfahren zur Herstellung von vorstehend beschriebenen Organosiliciumverbindungen, bei dem Organosiliciumverbindungen enthaltend Einheiten der allgemeinen Formel (V)

EₐR_{b}SiX_{c}O_{(4-a-b-c)/2} (V),

wobei
- **R, X, a, b** und **c**: die oben dafür angegebenen Bedeutungen haben und
- **E**: ein Rest der allgemeinen Formeln (VI) oder (VII)

-R⁵-(NR⁶-CH₂-CH₂)_{d}-NR⁶ ₂ (VI),

-R⁷-SH (VII),

bedeutet, worin
- **R**^{**5**} und **R**^{**7**}: jeweils unabhängig voneinander zweiwertige, gegebenenfalls substituierte Kohlenwasserstoffreste mit 1 bis 12 Kohlenstoffatomen bedeuten,
- **R**^{**6**}: die eine für **R**^{**1**} oben dafür angegebene Bedeutung hat,
- **d**: die Werte 0 oder eine ganze Zahl von 1 bis 8 ist und
in der allgemeinen Formel (VI) mindestens ein Rest **R**^{**6**} die Bedeutung von Wasserstoffatom hat, mit der Maßgabe, daß pro Molekül mindestens eine Einheit der Formel **E** enthalten ist, mit durch mono- oder polyhydroxylierten Kohlenwasserstoffresten bzw. Kohlenhydratderivaten modifizierten Verbindungen der allgemeinen Formeln (VIII) 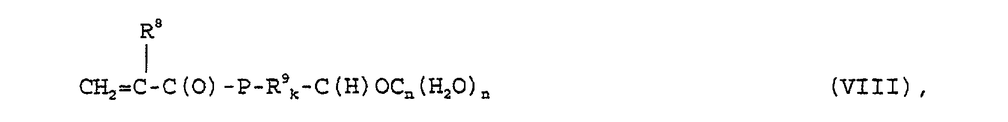 oder deren Organyl-substituierten Derivaten umgesetzt werden, wobei
- **R**^{**8**}: ein Wasserstoffatom oder eine Methylgruppe,
- **P**: einen Rest -O- oder -NR³,
- **k**: die Werte 0 oder 1 bedeuten und
- **R**^{**9**}: eine für R² angegebene Bedeutung hat und
- **n** und **R**^{**3**}: die oben dafür angegebenen Bedeutungen aufweisen.

Die Umsetzung kann dabei in Substanz, Lösung oder Emulsion durchgeführt werden.

Beispiele für Reste **R**^{**5**} und **R**^{**7**} sind lineare oder verzweigte Alkylenreste, wie etwa der 1,2-Ethylen-, 1,3-Propylen-, 1,2-Propylen-, 1,3-(2-Methylpropylen)- und Dimethylmethylenrest.

Bevorzugt handelt es sich bei **R**^{**5**} und **R**^{**7**} um den 1,3-Propylenrest.

Bevorzugt handelt es sich bei den Resten **E** der allgemeinen Formel (VI) um -(CH₂)₃NH₂, -(CH₂)₃NH-cyclo-C₆H₁₁, -(CH₂)₃-NH-CH₂-CH₂-NH₂ und -(CH₂)₃-NH-CH₂-CH₂-N(C₂H₅)₂, wobei -(CH₂)₃-NH₂ und -(CH₂)₃-NH-CH₂-CH₂-NH₂ besonders bevorzugt sind.

Bevorzugt handelt es sich bei den Resten **E** der Formel (VII) um - (CH₂)₃-SH.

Bevorzugt handelt es sich bei Rest E um solche der allgemeinen Formel (VI).

Beispiele für Rest **R**^{**9**} sind lineare oder verzweigte Alkylenreste, wie etwa der 1,2-Ethylen-, 1,3-Propylen-, 1,2-Propylen-, 1,3-(2-Methylpropylen)- und Dimethylmethylenrest, mit -SO₂NR₃- substituierte Reste, wie der Rest -CH₂-CH₂-N(C₄H₉)SO₂-.

Bevorzugt handelt es sich bei **R**^{**9**} um den 1,2-Ethylenrest.

Bevorzugt handelt es sich bei Rest **P** um den Rest -O-.

Vorzugsweise sind die bei dem Verfahren eingesetzten Organosiliciumverbindungen solche der allgemeinen Formel (IX)

EₕR₃₋ₕSiO(SiR₂O)ₒ(SiREO)ₘSiR₃₋ₕEₕ (IX),

wobei **R, E, h, o** und **m** die oben dafür angegebene Bedeutung haben.

Besonders bevorzugt handelt es sich bei den im Verfahren eingesetzten Organosiliciumverbindungen um Organopolysiloxanöle oder -wachse mit seiten- und/oder endständigen 3-Amino-n-propyl- oder N- (2-Aminoethyl)-3-amino-n-propylgruppen mit Aminzahlen von 0.1 bis 5.
Die Aminzahl bezeichnet die Anzahl der ml 1-n-HCl, die zum Neutralisieren von 1 g Organosiliciumverbindung erforderlich sind.

Bevorzugt handelt es sich bei den eingesetzten mono- oder polyhydroxylierten Kohlenwasserstoffresten bzw. Kohlenhydratderivaten der allgemeinen Formel (VIII) um
H₂C=CR⁸-CO-O-CH₂-CH₂-Z,
wobei **Z** und **R**^{**8**} die vorstehenden Bedeutungen aufweisen.

Die eingesetzten Organosiliciumverbindungen enthaltend Einheiten der allgemeinen Formel (V) sowie die mono- oder polyhydroxylierten Kohlenwasserstoffreste bzw. Kohlenhydratderivate der allgemeinen Formel (VIII) sind handelsübliche Produkte bzw. nach in der Chemie bekannten Methoden herstellbar.

Bei dem Verfahren können alle bekannten Verbindungen, die Michael-Reaktion ähnliche Reaktionen katalysieren, wie beispielsweise Eisessig, Zinn(IV)-chlorid, Natriummethylat und Alkaliamide, eingesetzt werden, was nicht bevorzugt ist.

Des weiteren können bei dem Verfahren Radikalinitiatoren, wie Azoverbindungen und/oder Peroxoverbindungen, als Katalysatoren zugesetzt werden, was nicht bevorzugt ist. Falls derartige Katalysatoren eingesetzt werden, handelt es sich um Mengen von vorzugsweise 0,1 - 5 Gewichtsprozent, bezogen auf das Gesamtgewicht der reaktiven Komponenten.

Vorzugsweise werden bei dem Verfahren pro Mol des Restes **E** der eingesetzten Organosiliciumverbindung enthaltend Einheiten der allgemeinen Formel (V) 0.001-10 Mol Verbindung der allgemeinen Formel (VIII), besonders bevorzugt 0.01-3 Mol, insbesondere 0,1-2 Mol, verwendet.

Bei dem erfindungsgemäßen Verfahren können organische Lösungsmittel, Wasser oder deren Mischungen mitverwendet werden, wobei der Zusatz von organischen Lösungsmitteln bevorzugt ist. Beispiele für gegebenenfalls eingesetzte organische Lösungsmittel sind Toluol, Xylol, Tetrahydrofuran, n-Butylacetat, Isopropanol, Methanol, Dimethoxyethan, Di-n-Butylether und tert.-Butylmethylketon. Falls Lösungsmittel eingesetzt werden, handelt es sich bevorzugt um Isopropanol, Methanol und Toluol. Falls Lösungsmittel eingesetzt werden, handelt es sich um Mengen von vorzugsweise 5-50 Gewichtsprozent, bezogen auf das Gesamtgewicht der reaktiven Komponenten.

Falls Lösungsmittel mitverwendet werden, so werden diese nach der Umsetzung vorzugsweise entfernt.

Das Verfahren wird vorzugsweise beim Druck der umgebenden Atmosphäre, also zwischen 900 und 1100 hPa, durchgeführt. Es kann aber auch bei höheren oder niedrigeren Drücken durchgeführt werden.

Ferner wird das Verfahren vorzugsweise bei einer Temperatur von 25 bis 150 °C, besonders bevorzugt 25 bis 120 °C, insbesondere 25 bis 100 °C, durchgeführt. Es kann aber auch bei höheren oder niedrigeren Temperaturen durchgeführt werden.

Bei dem Verfahren können nicht umgesetzte Reste **E** der Organosiliciumverbindungen der allgemeinen Formel (V) weiter mit Säuren zu z.B. Ammoniumgruppen oder alkoxylierten bzw. (poly- bzw. per-)fluoralkylierten (Meth-)Acrylaten zur weiteren Hydrophilierung bzw. Oleophobierung der Organosiliciumverbindungen umgesetzt werden.

Ferner ist es auch möglich, die Organosiliciumverbindungen enthaltend Einheiten der allgemeinen Formel (I) dadurch herzustellen, daß die polymeranaloge Michael-Addition-ähnliche Reaktion mit (meth-)acrylatfunktionalisierten Organosiliciumverbindungen durchgeführt wird.

Die nach dem Verfahren erhaltenen mono- oder polyhydroxylierte Kohlenwasserstoffreste bzw. Kohlenhydratderivate aufweisenden Organopolysiloxane können mit Organopolysiloxanen (1), bevorzugt ausgewählt aus der Gruppe bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden, wodurch beispielsweise die Einstellung des gewünschten Molekulargewichtes sowie die gezielte Verteilung der mono- oder polyhydroxylierten Kohlenwasserstoffreste bzw. Kohlenhydratderivate im Molekül ermöglicht wird.

Vorzugsweise werden als lineare, endständige Triorganosiloxygruppen aufweisende Organopolysiloxane (1) solche der allgemeinen Formel (X)

R¹⁰ ₃SiO (SiR¹⁰ ₂O)ᵣSiR¹⁰ ₃, (X),

als lineare, endständige Hydroxylgruppen aufweisende Organopolysiloxane solche der allgemeinen Formel (XI)

HO(SiR¹⁰ ₂O)ₛH, (XI),

als cyclische Organopolysiloxane solche der allgemeinen Formel (XII)

(R¹⁰ ₂SiO)t, (XII),

und als Mischpolymerisate solche aus Einheiten der allgemeinen Formel (XIII)

R¹⁰ ₂SiO und R¹⁰SiO_{3/2} (XIII),

eingesetzt, wobei
- **R**^{**10**}: jeweils gleich oder verschieden sein kann und eine für **R** angegebene Bedeutung hat,
- **r** und **s**: jeweils die Werte 0 oder eine ganze Zahl von 1 bis 1500 und
- **t**: eine ganze Zahl im Wert von 3 bis 12 sind.

Die Mengenverhältnisse der bei der gegebenenfalls durchgeführten Equilibrierung eingesetzten Organopolysiloxane (1) und der Organosiliciumverbindungen enthaltend Einheiten der allgemeinen Formel (I) werden lediglich durch den gewünschten Anteil der mono- oder polyhydroxylierten Kohlenwasserstoffreste bzw. Kohlenhydratderivate in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden bevorzugt saure oder basische Katalysatoren, welche die Equilibrierung fördern, eingesetzt, wobei saure Katalysatoren besonders bevorzugt sind.

Beispiele für saure Katalysatoren sind Schwefelsäure, Phosphorsäure, Trifluormethansulfonsäure, Phosphornitridchloride und unter den Reaktionsbedingungen saure feste Katalysatoren, wie säureaktivierte Bleicherde, saure Zeolithe, sulfonierte Kohle und sulfoniertes Styrol-Divinylbenzol-Mischpolymerisat, wobei als saure Katalysatoren Phosphornitridchloride bevorzugt sind. Saure Katalysatoren werden vorzugsweise in Mengen von 5 bis 1000 Gewichts-ppm (= Teile je Million), insbesondere 50 bis 200 Gewichts-ppm, jeweils bezogen auf das Gesamtgewicht der eingesetzten Organosiliciumverbindungen, verwendet.

Beispiele für basische Katalysatoren sind Benzyltrimethylammoniumhydroxid, Tetramethylammoniumhydroxid, Alkalihydroxide, Erdalkalihydroxide in methanolischer Lösung, Phosphoniumhydroxide und Silanolate, wobei als basische Katalysatoren Alkalihydroxide bevorzugt sind. Basische Katalysatoren werden bevorzugt in Mengen von 50 bis 10000 Gewichts-ppm (= Teile je Million), insbesondere 500 bis 2000 Gewichts-ppm, jeweils bezogen auf das Gesamtgewicht der eingesetzten Organosiliciumverbindungen, verwendet.

Die gegebenenfalls durchgeführte Equilibrierung wird vorzugsweise bei 80 bis 150 °C und bei einem Druck der umgebenden Atmosphäre, also etwa zwischen 900 und 1100 hPa, durchgeführt. Falls erwünscht, können aber auch höhere oder niedrigere Drücke angewendet werden.

Das Equilibrieren wird vorzugsweise in 5 bis 20 Gewichtsprozent, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des beim Equilibrieren erhaltenen Gemisches kann der Katalysator unwirksam gemacht werden.

Die Verfahren können absatzweise, halbkontinuierlich oder vollkontinuierlich durchgeführt werden.

Das Verfahren hat den Vorteil, daß es sehr einfach in der Durchführung ist und ein sehr hoher Umsatz erzielt wird.

Des weiteren hat das Verfahren den Vorteil, daß zum einen durch die Stöchiometrie der eingesetzten Verbindungen, zum anderen durch Modifikation der Polymerstrukturen und -kettenlängen bzw. der Silanstrukturen und durch die Kettenlänge des hydrophilen Teiles des Acrylat-Derivates die Hydrophilie der Organosiliciumverbindungen enthaltend Einheiten der allgemeinen Formel (I) auf einfache Art und ganz gezielt eingestellt werden kann.

Ferner hat das Verfahren den Vorteil, daß keine Übergangs- oder Schwermetalle verwendet werden müssen und die Temperaturbelastung gering ist. Vorteile des Verfahrens liegen also darin, daß bei den Vorprodukten bestimmte Polymerationsgrade des Zukkeranteils eingestellt werden können mit der Möglichkeit der stufenlosen Erhöhung der Hydrophilie.
Auch ohne Erhöhung des Polymerisationsgrades des mono- oder polyhydroxylierten Kohlenwasserstoffrestes bzw. des Kohlenhydratderivates im Vorprodukt bietet sich die Möglichkeit der Einstellung der Hydrophilie durch Wahl der Stöchiometrie zwischen z.B. Aminfunktionen und umzusetzenden Vorprodukt.
Das Verfahren ist kostengünstig, weil es - im Falle der Kohlenhydratderivate - von den einfachen, natürlich vorkommenden Zukkern, wie Glucose, einer Aldohexose ausgeht, die nicht chemisch durch beispielsweise Oxidation oder Reduktion des Zuckergerüstes vorbehandelt werden müssen bzw. in Kohlenhydratglycosiden seinen Ausgangspunkt findet, die sehr einfach zu erhalten sind.

Auch aus toxilogischer Sicht sind die Acrylat-Vorstufen unbedenklich. Bis zu einer oralen Applikation von 16 000 mg/kg GEMA(Glucosyloxyethyl(meth)acrylat)/kg Ratte wurde die Überlebensrate von Ratten nicht beeinflußt. Durch die Zuckeranteile sind die nach dem beanspruchten Verfahren hergestellten Verbindungen biologisch abbaubar und weisen z.B. gegenüber Polyethylenoxid- bzw. Polypropylenoxid-derivatisierten Siliconen erhebliche Vorteile auf.

Die Organosiliciumverbindungen enthaltend Einheiten der allgemeinen Formel (I) haben den Vorteil, daß sie oleophobe Siliconanteile und hydrophobe Eigenschaften in sich vereinigen und sich durch eine relativ hohe Detergenzienbeständigkeit und Oberflächenaktivität auszeichnen.

Des weiteren haben die Organosiliciumverbindungen enthaltend Einheiten der allgemeinen Formel (I) den Vorteil, daß sie, falls erforderlich, neben der Oleophobie des Siliconanteils ganz gezielt hydrophil eingestellt werden können.

Ferner haben die Organosiliciumverbindungen enthaltend Einheiten der allgemeinen Formel (I) den Vorteil, daß sie durch die verbleibenden Amingruppen einen guten Weichgriff und eine geringe Vergilbungsneigung in der Textil-, Teppich- und Faserpräparation zeigen.

Die Organosiliciumverbindungen enthaltend Einheiten der allgemeinen Formel (I) können für alle Zwecke eingesetzt werden, für die auch bisher hydrophilisierte, oberflächenaktive bzw. oberflächenmodifizierende Organosiliciumverbindungen eingesetzt wurden, wie beispielsweise zur Behandlung von textilen Flächengebilden, wie z.B. Geweben, Maschenwaren oder Vliesen, Textilfaserpräparation und Lederbehandlung sowie in der Kosmetik, z.B. als Emulgator oder Emulgierhilfsmittel, als Additive- bzw. Adjuvantien in Pflegemittel-, Polish-, Lack- und Baustoffindustrie.

In Pflanzenschutzmitteln können die Organosiliciumverbindungen enthaltend Einheiten der allgemeinen Formel (I) aufgrund von Oberflächenaktivitäts-, Oberflächenmodifizierungs- und Formulierungseigenschaften zur Anwendung kommen.

Interessant sind die Organosiliciumverbindungen vor allem als grenzflächenaktive und grenzflächenmodifizierende Verbindungen. Diese Eigenschaften, welche auch durch die gewählte Länge des Siloxanteils einstellbar sind, sichern die Ökoverträglichkeit durch den Abbau der Substanzen am mono- oder polyhydroxylierten Kohlenwasserstoffrest bzw. Kohlenhydratderivatrest. Weiterhin sind die Organosiliciumverbindungen als Lösemittel in Fest- und Flüssigformulierungen und als kationische, anionische bzw. betainische Verbindungen einsetzbar.

Die Organosiliciumverbindungen können u. a. auch als nichtionische, oberflächenaktive Verbindungen, als Agentien mit antistatischem Effekt, als "Releasing"-Verbindungen und als Kunststoffmodifikatoren eingesetzt werden.

In den nachfolgenden Beispielen beziehen sich alle Angaben von Teilen und Prozentsätzen, soweit nicht anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20 °C bzw. bei einer Temperatur, die sich beim Zusammengeben der Reaktanden bei Raumtemperatur ohne zusätzliche Heizung oder Kühlung einstellt, durchgeführt. AZ bedeutet Aminzahl.

Nachstehend eingesetzt werden
Glucosyloxyethylacrylat 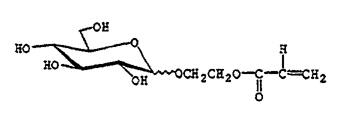 Galactosyloxyethylacrylat 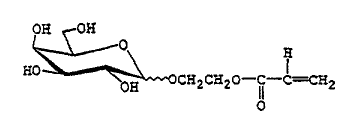 Mannosyloxyethylacrylat 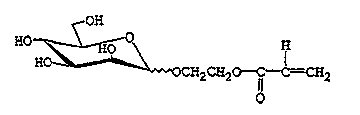 Xylosyloxyethylacrylat 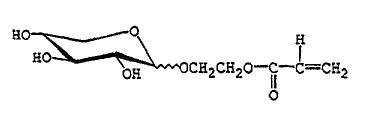 oder jeweils die entsprechenden Methacrylate.
z.B. Glucosyloxyethylmethacrylat (GEMA).

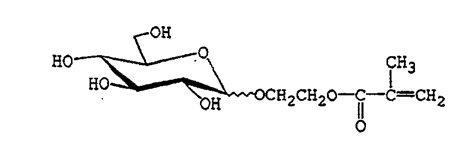

### Beispiel 1

Zu einer Lösung aus 70.0 g α,ω-funktionalisiertem Aminosiliconöl (AZ = 0.75, 26.25 mmol primäres Amin) und 100 ml Isopropanol werden 7.30 g (26.25 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 2

Zu einer Lösung aus 70.0 g α,ω-funktionalisiertem Aminosiliconöl (AZ = 0.75, 26.25 mmol primäres Amin) und 100 ml 1,4-Dioxan werden 7.30 g (26.25 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 3

Zu einer Lösung aus 70.0 g α,ω-funktionalisiertem Aminosiliconöl (AZ = 0.75, 26.25 mmol primäres Amin) und 100 ml n-Dibutylether werden 7.30 g (26.25 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 4

Zu einer Lösung aus 70.0 g α,ω-funktionalisiertem Aminosiliconöl (AZ = 0.75, 26.25 mmol primäres Amin) und 100 ml tert-Butylmethylketon werden 7.30 g (26.25 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 5

Zu einer Lösung aus 60.0 g lateralem Aminosiliconöl (AZ = 0.25, 7.5 mmol primäres Amin) und 100 ml Isopropanol werden 2.09 g (7.5 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 6

Zu einer Lösung aus 60.0 g Aminosiliconwachs (AZ = 0.6, 18.0 mmol primäres Amin) und 100 ml Isopropanol werden 5.01 g (18.0 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 7

Zu einer Lösung aus 70.0 g α,ω-funktionalisiertem Aminosiliconöl (AZ = 0.75, 26.25 mmol primäres Amin) und 100 ml Isopropanol werden 14.61 g (52.5 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 8

Zu einer Lösung aus 60.0 g lateralem Aminosiliconöl (AZ = 0.25, 7.5 mmol primäres Amin) und 100 ml Isopropanol werden 4.17 g (15.0 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 9

Zu einer Lösung aus 60.0 g Aminosiliconwachs (AZ = 0.6, 18.0 mmol primäres Amin) und 100 ml Isopropanol werden 10.02 g (36.0 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 10

Zu einer Lösung aus 30.0 g mercaptofunktionellem Siliconöl (SH-Zahl = 1.4, 42.0 mmol SH) und 100 ml Isopropanol werden 11.69 g (42.0 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 11

Zu einer Lösung aus 60.0 g lateralem Aminosiliconöl (AZ = 0.57, 17.1 mmol primäres Amin) und 100 ml Isopropanol werden 2.38 g (8.55 mmol) Glucosyloxyethylacrylat und 4.13 g Polyoxyalkylenfunktionalisiertem Acrylat (8.55 mmol) gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 12

Zu einer Lösung aus 60.0 g Aminosiliconwachs (AZ = 0.6, 18.0 mmol primäres Amin) und 100 ml Isopropanol werden 2.50 g (9.0 mmol) Glucosyloxyethylacrylat und 5.49 g Polyfluoralkylfunktionalisiertem Acrylat (9.0 mmol) gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 13

Zu einer Lösung aus 60.0 g lateralem Aminosiliconöl (AZ = 0.57, 17.1 mmol primäres Amin) und 100 ml Isopropanol werden 9.52 g (34.2 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 14

Zu einer Lösung aus 60.0 g Aminosiliconwachs (AZ = 1.0, 30.0 mmol primäres Amin) und 100 ml Isopropanol werden 16.70 g (60.0 mmol) Glucosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 15

Zu einer Lösung aus 60.0 g lateralem Aminosiliconöl (AZ = 0.25, 7.5 mmol primäres Amin) und 100 ml Isopropanol werden 4.17 g (15.0 mmol) Galactosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 16

Zu einer Lösung aus 60.0 g lateralem Aminosiliconöl (AZ = 0.25, 7.5 mmol primäres Amin) und 100 ml Isopropanol werden 4.17 g (15.0 mmol) Mannosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 17

Zu einer Lösung aus 60.0 g lateralem Aminosiliconöl (AZ = 0.25, 7.5 mmol primäres Amin) und 100 ml Isopropanol werden 3.96 g (15.0 mmol) Xylosyloxyethylacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

### Beispiel 18

Zu einer Lösung aus 60.0 g Aminosiliconwachs (AZ = 1.0, 30.0 mmol primäres Amin) und 100 ml Isopropanol werden 17.54 g (60.0 mmol) Glucosyloxyethylmethacrylat gegeben und die Reaktionsmischung 4 h lang bei einer Temperatur von 70 °C erhitzt. Anschließend wird das Lösemittel bei einer Kolbeninnentemperatur von 40-50 °C und einem Druck von 20 mbar abdestilliert. Danach wird die Reaktionsmischung 0.5 h lang bei einer Temperatur von 40-50 °C und einem Druck von 20 mbar zur Entfernung der flüchtigen Bestandteile ausgeheizt.

## Patentansprüche

1. Organosiliciumverbindungen enthaltend Einheiten der allgemeinen Formel (I)
AₐR_{b}SiX_{c}O_{(4-a-b-c)/2} (I)
wobei
**R** gleich oder verschieden sein kann und einen einwertigen, gegebenenfalls mit Halogen-, Amin-, Mercapto- oder Ammoniumgruppen substituierten Kohlenwasserstoffrest mit 1 bis 22 Kohlenstoffatomen bedeutet,
**X** gleich oder verschieden ist und ein Chloratom oder einen Rest der Formel -OR¹ bedeutet,
**R**^{**1**} gleich Wasserstoffatom oder Alkylrest mit 1 bis 8 Kohlenstoffatomen, der durch Ether-Sauerstoff-Atome substituiert sein kann, oder einen-Rest der allgemeinen Formel (II)
-R²{[CH(CH₃)CH₂O]ₑ[CH₂CH₂O]_{f}[(CH₂)₄O]_{g}R₃}_{y-1} (II)
bedeutet, wobei
R² einen zweiwertigen, dreiwertigen oder vierwertigen Kohlenwasserstoffrest mit 2 bis 30 Kohlenstoffatomen bedeutet, der durch eine oder mehrere Gruppen der Formeln 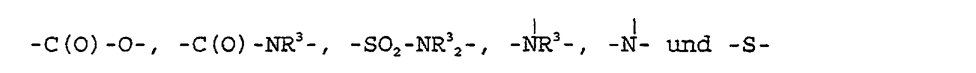 unterbrochen ist, und der durch Sauerstoffatome unterbrochen sein kann
**y** entsprechend der Wertigkeit von Rest **R**^{**2**} die Werte 2, 3 oder 4 bedeutet,
**R**^{**3**} ein Wasserstoffatom oder einen gegebenenfalls durch eine Gruppe -C(O)-unterbrochenen Kohlenwasserstoffrest mit 1 bis 20 Kohlenstoffatomen bedeutet,
**e, f** und **g** jeweils unabhängig voneinander die Werte 0 oder eine ganze Zahl von 1 - 200 bedeuten, mit der Maßgabe, daß die Summe **e+f+g** ≥ 1 ist,
**A** ein Rest der allgemeinen Formel (III)
-R⁴{-C(H)Cₙ(H₂O)ₙ}_{y-1} (III)
ist, wobei
**R**^{**4**} eine für **R**^{**2**} angegebene Bedeutung hat,
**y** entsprechend der Wertigkeit von Rest **R**^{**4**} die Werte 2, 3 oder 4,
**n** eine ganze Zahl von 1 bis 1 000 000,
**a** die Werte 0, 1 oder 2 und,
**b** und **c** jeweils die Werte 0, 1, 2 oder 3 bedeuten, und bei Oligo- und Polysacchariden pro formal hinzugefügtem Kohlenhydrat-Monomeren oder -polymeren ein Molekül H₂O aus der Summenformel abzuziehen ist,
oder A ein teilweise reduziertes, oxidiertes oder teilweise dehydratisiertes oder Organyl-modifiziertes Derivat der Formel (III) bedeutet, mit der Maßgabe, daß die Summe **a+b+c** ≤ 4 ist und die Organosiliciumverbindung pro Molekül mindestens einen Rest **A** aufweist.

2. Organosiliciumverbindungen nach Anspruch 1, welche ein durchschnittliches Molekulargewicht von 200 bis 1 000 000 g/mol besitzen.

3. Organosiliciumverbindungen nach Anspruch 1 oder 2, bei denen **n** 2, 4, 6, 8, 10, 12, 18 oder 20 ist.

4. Organosiliciumverbindungen nach Anspruch 1 bis 3, welche der allgemeinen Formel (IV)
AₕR₃₋ₕSiO(SiR₂O)ₒ(SiRAO)ₘSiR₃₋ₕAₕ (IV),
entsprechen, wobei **A** und **R** die in Anspruch 1 dafür angegebene Bedeutung haben,
**h** die Werte 0, 1 oder 2 hat,
**m** und **o** jeweils 0 oder eine ganze Zahl von 1 bis 1000 bedeuten, mit der Maßgabe, daß mindestens ein Rest **A** je Molekül enthalten ist und die o Einheiten (SiR₂O) und die **m** Einheiten (SiRAO) beliebig im Molekül verteilt sein können.

5. Verfahren zur Herstellung von Organosiliciumverbindungen gemäß Anspruch 1, bei dem Organosiliciumverbindungen enthaltend Einheiten der allgemeinen Formel (V)
EₐR_{b}SiX_{c}O_{(4-a-b-c)/2} (V),
wobei
**R, X**, **a**, **b** und **c** die in Anspruch 1 dafür angegebenen Bedeutungen haben und
**E** ein Rest der allgemeinen Formeln (VI) oder (VII)
-R⁵-(NR⁶-CH₂-CH₂)_{d}-NR⁶ ₂ (VI),
-R⁷-SH (VII),
bedeutet, worin
**R**^{**5**} und **R**^{**7**} jeweils unabhängig voneinander zweiwertige, gegebenenfalls substituierte Kohlenwasserstoffreste mit 1 bis 12 Kohlenstoffatomen bedeuten,
**R**^{**6**} eine in Anspruch 1 für **R**^{**1**} dafür angegebene Bedeutung hat,
**d** die Werte 0 oder eine ganze Zahl von 1 bis 8 ist und in der allgemeinen Formel (VI) mindestens ein Rest **R**^{**6**} die Bedeutung von Wasserstoffatom hat, mit der Maßgabe, daß pro Molekül mindestens eine Einheit der Formel **E** enthalten ist, mit durch mono- oder polyhydroxylierten Kohlenwasserstoffresten bzw. Kohlenhydratderivaten modifizierten Verbindungen der allgemeinen Formeln (VIII) 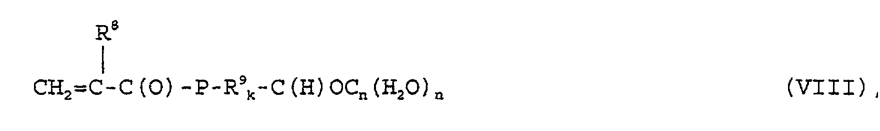 oder deren Organyl-substituierten Derivaten umgesetzt werden, wobei
**R**^{**8**} ein Wasserstoffatom oder eine Methylgruppe,
**P** einen Rest -O- oder -NR³,
**k** die Werte 0 oder 1 bedeuten und
**R**^{**9**} eine für **R**^{**2**} angegebene Bedeutung hat und
**n** und **R**^{**3**} die in Anspruch 1 dafür angegebenen Bedeutungen aufweisen.

6. Verfahren nach Anspruch 5, bei dem es sich bei den eingesetzten Organosiliciumverbindungen um solche der allgemeinen Formel (IX)
EₕR₃₋ₕSiOₒ(SiR₂O)(SiREO)ₘSiR₃₋ₕEₕ (IX),
handelt, wobei **R, E, h,** o und **m** die in den Ansprüchen 1, 4 und 5 dafür angegebenen Bedeutungen haben.

7. Verfahren nach Anspruch 5 oder 6, bei dem es sich bei den eingesetzten mono- oder polyhydroxylierten Kohlenwasserstoffresten bzw. Kohlenhydratderivaten der allgemeinen Formel (VIII) um Verbindungen
H₂C=CH-CO-O-CH₂-CH₂-Z
handelt,
wobei **Z** die Formel OC₆H₁₁O₅, oder ein Oligo- oder Polysaccharidderivat davon bedeutet.

8. Verfahren nach Anspruch 5 bis 7, bei dem pro Mol des Restes **E** der eingesetzten Organosiliciumverbindung enthaltend Einheiten der allgemeinen Formel (V) 0.001-10 Mol Verbindung der allgemeinen Formel (VIII) eingesetzt werden.

9. Verwendung der Organosiliciumverbindungen gemäß Anspruch 1 bis 4 als grenzflächenaktive und grenzflächenmodifizierende Verbindungen.

## Claims

1. Organosilicon compounds containing units of the general formula (I)
AₐR_{b}SiX_{c}O_{(4-a-b-c)/2} (I)
in which
R can be identical or different and is a monovalent hydrocarbon radical which has 1 to 22 carbon atoms and is optionally substituted by halogen, amino, mercapto or ammonium groups,
X is identical or different and is a chlorine atom or a radical of the formula -OR¹,
R¹ is a hydrogen atom or an alkyl radical having 1 to 8 carbon atoms, which can be substituted by etheroxygen atoms, or a radical of the general formula (II)
-R²{[CH(CH₃)CH₂O)ₑ[CH₂CH₂O]_{f}[(CH₂)₄O]_{g}R₃}_{y-1} (II),
in which
R² is a divalent, trivalent or tetravalent hydrocarbon radical having 2 to 30 carbon atoms, which is interrupted by one or more groups of the formulae 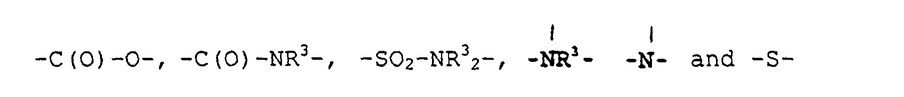 and which can be interrupted by oxygen atoms,
y is the value 2, 3 or 4, according to the valency of the radical R²,
R³ is a hydrogen atom or a hydrocarbon radical which has 1 to 20 carbon atoms and is optionally interrupted by a group -C(O)-,
e, f and g in each case independently of one another are the value 0 or an integer from 1 to 200, with the proviso that the sum of e+f+g ≥ 1,
A is a radical of the general formula (III)
-R⁴{-C(H)Cₙ(H₂O)ₙ}_{y-1} (III),
in which
**R**^{**4**} has a meaning given for R²,
**y** is the value 2, 3 or 4, according to the valency of the radical R⁴,
**n** is an integer from 1 to 1,000,000,
**a** is the value 0, 1 or 2 and
**b** and **c** in each case are the value 0, 1, 2 or 3, and in the case of oligo- and polysaccharides, one molecule of H₂O is to be subtracted from the empirical formula per carbohydrate monomer or polymer added to the formula, or A is a partly reduced, oxidized or partly dehydrated or organyl-modified derivative of the formula (III), with the proviso that the sum of a+b+c ≤ 4 and the organosilicon compound contains at least one radical A per molecule.

2. Organosilicon compounds according to Claim 1, which have an average molecular weight of 200 to 1,000,000 g/mol.

3. Organosilicon compounds according to Claim 1 or 2, in which n is 2, 4, 6, 8, 10, 12, 18 or 20.

4. Organosilicon compounds according to Claims 1 to 3, which correspond to the general formula (IV)
AₕR₃₋ₕSiO(SiR₂O)ₒ(SiRAO)ₘSiR₃₋ₕAₕ (IV),
in which A and R have the meaning given for these radicals in Claim 1,
h has the value 0, 1 or 2 and
m and o are in each case 0 or an integer from 1 to 1000, with the proviso that they contain at least one radical A per molecule and the o units (SiR₂O) and the m units (SiRAO) can be distributed as desired in the molecule.

5. Process for the preparation of organosilicon compounds according to Claim 1, in which organosilicon compounds containing units of the general formula (V)
EₐR_{b}SiX_{c}O_{(4-a-b-c)/2} (V),
in which
R, X, a, b and c have the meanings given for these symbols in Claim 1 and
E is a radical of the general formula (VI) or (VII)
-R⁵-(NR⁶-CH₂-CH₂)_{d}-NR⁶ ₂ (VI),
-R⁷-SH (VII),
in which
R⁵ and R⁷ in each case independently of one another are divalent, optionally substituted hydrocarbon radicals having 1 to 12 carbon atoms,
R⁶ has a meaning given for R¹ in Claim 1,
d is the value 0 or an integer from 1 to 8 and in the general formula (VI) at least one radical R⁶ is a hydrogen atom, with the proviso that they contain at least one unit of the formula E per molecule,
are reacted with a compound modified by mono- or polyhydroxylated hydrocarbon radicals or carbohydrate derivatives, of the general formula (VIII) 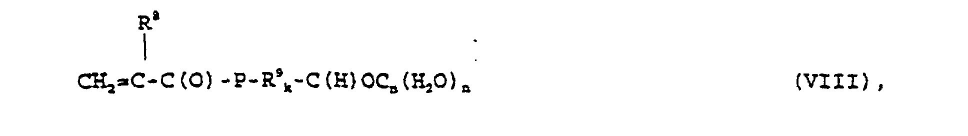 or organyl-substituted derivatives thereof, in which
R⁸ is a hydrogen atom or a methyl group,
R⁸ is a hydrogen atom or a methyl group,
P is a radical -O- or -NR³,
k is the value 0 or 1 and
R⁹ has a meaning given for R² and
n and R³ have the meanings given for these symbols in Claim 1.

6. Process according to Claim 5, in which the organosilicon compounds employed are those of the general formula (IX)
EₕR₃₋ₕSiO(SiR₂O) (SiREO)ₘSiR₃₋ₕEₕ (IX),
in which R, E, h, o and m have the meanings given for these symbols in Claims 1, 4 and 5.

7. Process according to Claim 5 or 6, in which the mono- or polyhydroxylated hydrocarbon radicals or carbohydrate derivatives employed, of the general formula (VIII), are compounds
H₂C=CH-CO-O-CH₂-CH₂-Z,
in which Z is the formula OC₆H₁₁O₅, or an oligo- or polysaccharide derivative thereof.

8. Process according to Claims 5 to 7, in which 0.001-10 mol of compound of the general formula (VIII) is employed per mole of the radical E of the organosilicon compound containing units of the general formula (V) employed.

9. The use of organosilicon compounds according to Claims 1 to 4 as interface-active and interface-modifying compounds.

## Revendications

1. Composés organosiliciés renfermant des mofis de formule générale (I)
A_{z}R_{b}SiX_{c}O_{(4-a-b-c)/2} (I)
dans laquelle
R peut être identique ou différent et représente un radical hydrocarboné monovalent ayant de 1 à 22 atomes de carbone, éventuellement substitué par des groupes halogéno, amino, mercapto ou ammonium,
X est identique ou différent et représente un atome de chlore ou un radical de formule -OR¹,
R¹ représente un atome d'hydrogène ou un radical alkyle ayant de 1 à 8 atomes de carbone, qui peut être substitué par des atomes d'oxygène d'ether, ou un radical de formule générale (II)
-R²{[CH(CH₃)CH₂O]ₑ[CH₂CH₂O]_{f}[(CH₂)₄O]_{g}R₃}_{y-1} (II)
dans laquelle
R² représente un radical hydrocarboné bivalent, trivalent ou tétravalent ayant de 2 à 30 atomes de carbone, qui est interrompu par un ou plusieurs groupes de formules 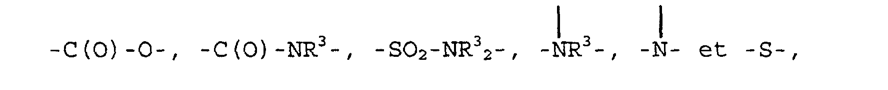 et peut être interrompu par des atomes d'oxygène,
y vaut 2, 3 ou 4 en fonction de la valence du radical R²,
R³ représente un atome d'hydrogène ou un radical hydrocarboné ayant de 1 à 20 atomes de carbone, éventuellement interrompu par un groupe -C(O)-,
e, f et g valent chacun, indépendamment les uns des autres, 0 ou représentent un entier de 1 à 200, à condition que la somme e+f+g ≥ 1,
A représente un radical de formule générale (III)
-R⁴{-C(H) Cₙ(H₂O)ₙ}_{y-1} (III)
dans laquelle
R⁴ a l'une des significations indiquées pour R²,
y vaut 2, 3 ou 4 en fonction de la valence du radical R⁴,
n représente un entier de 1 à 1 000 000,
a vaut 0, 1 ou 2 et
b et c valent chacun 0, 1, 2 ou 3, et dans le cas d'oligosaccharides et de polysaccharides, une molécule de H₂O doit être soustraite de la formule empirique par monomère ou polymère d'hydrate de carbone ajouté à la formule,
ou A représente un dérivé partiellement réduit, oxydé ou partiellement déshydraté ou organyl-modifié de formule (III), à condition que la somme a+b+c ≤ 4 et que le composé organosilicié renferme au moins un radical A par molécule.

2. Composés organosiliciés selon la revendication 1 présentant un poids moléculaire moyen de 200 à 1 000 000 g/mol.

3. Composés organosiliciés selon la revendication 1 ou 2, dans lesquels n vaut 2, 4, 6, 8, 10, 12, 18 ou 20.

4. Composés organosiliciés selon les revendications 1 à 3 de formule générale (IV)
AₕR₃₋ₕSiO(SiR₂O)ₒ(SiRAO)ₘSiR₃₋ₕAₕ (IV),
dans laquelle A et R ont la signification indiquée à cet effet dans la revendication 1,
h vaut 0, 1 ou 2,
m et o valent chacun 0 ou représentent un entier de 1 à 1000, à condition qu'au moins un radical A soit présent par molécule et que les o motifs (SiR₂O) et les m motifs (SiRAO) puissent être répartis de manière quelconque dans la molécule.

5. Procédé de préparation de composés organosiliciés selon la revendication 1, dans lequel des composés organosiliciés renfermant des motifs de formule générale (V)
EₐR_{b}SiX_{c}O_{(4-a-b-c)/2} (V),
dans laquelle
R, X, a, b et c ont les significations indiquées à cet effet dans la revendication 1 et
E représente un radical de formules générales (VI) ou (VII)
-R⁵- (NR⁶-CH₂-CH₂)_{d}-NR⁶₂ (VI),
-R⁷-SH (VII),
dans lesquelles
R⁵ et R⁷ représentent chacun, indépendamment l'un de l'autre, des radicaux hydrocarbonés bivalents éventuellement substitués ayant de 1 à 12 atomes de carbone,
R⁶ a l'une des significations indiquées à cet effet pour R¹ dans la revendication 1,
d vaut 0 ou représente un entier de 1 à 8 et dans la formule générale (VI), au moins un radical R⁶ représente un atome d'hydrogène, à condition qu'au moins un motif de formule E soit présent par molécule,
sont mis à réagir avec des composés de formule générale (VIII) modifiés par des dérivés d'hydrates de carbone ou des radicaux hydrocarbonés mono- ou polyhydroxylés 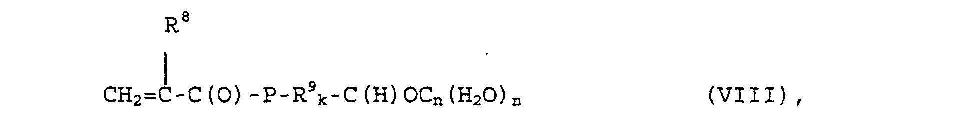 ou leurs dérivés organyl-substitués, dans laquelle
R⁸ représente un atome d'hydrogène ou un groupe méthyle,
P représente un radical -O- ou -NR³,
k vaut 0 ou 1 et
R⁹ a l'une des significations indiquées pour R² et
n et R³ ont les significations indiquées à cet effet dans la revendication 1.

6. Procédé selon la revendication 5, dans lequel les composés organosiliciés utilisés sont ceux de formule générale (IX)
EₕR₃₋ₕSiOₒ(SiR₂O) (SiREO)ₙSiR₃₋ₕEₕ (IX),
dans laquelle R, E, h, o et m ont les significations indiquées à cet effet dans les revendications 1, 4 et 5.

7. Procédé selon la revendication 5 ou 6, dans lequel les dérivés d'hydrates de carbone ou radicaux hydrocarbonés mono- ou polyhydroxylés utilisés de formule générale (VIII) sont des composés
H₂C=CH-CO-O-CH₂-CH₂-Z
dans lesquels Z est de formule OC₆H₁₁O₅ ou représente un dérivé oligosaccharide ou polysaccharide de celle-ci.

8. Procédé selon les revendications 5 à 7, dans lequel on utilise de 0,001 à 10 mol de composé de formule générale (VIII) par mole du radical E du composé organosilicié renfermant des motifs de formule générale (V).

9. Utilisation des composés organosiliciés selon les revendications 1 à 4 en tant que composés actifs en interface et modificateurs d'interface.
